# EUROPEAN PATENT SPECIFICATION

(11) **EP 0 835 740 B1**
(45) Date of publication and mention of the grant of the patent: **21.11.2001**
(21) Application number: 97116956.0
(22) Date of filing: 30.09.1997
(51) Int. Cl.: B29C 63/42

(54) **Method for applying an external protective sheath, made of shrink-wrap polymeric material, to a flexible corrugated metal hose, and corrugated and sheathed metal hose produced with the method**
Verfahren zum Aufbringen einer schrumpfbaren polymeren Aussenschutzschichten auf ein biegbares Wellrohr und so erhaltenes beschichtetes Wellrohr
Procédé pour appliquer un revêtement externe en polymère rétractable sur un tuyau ondulé flexible et tuyau revêtu ainsi obtenu

(30) Priority: 08.10.1996 IT TO960820
(43) Date of publication of application: 15.04.1998
(73) Proprietor: Castelli, Sergio, I-10146 Torino (IT)
(72) Inventor: Castelli, Sergio, I-10146 Torino (IT)
(74) Representative: Modiano, Guido, Dr.-Ing.

(56) References cited:
- EP-A- 0 342 802
- EP-A- 0 591 831
- DE-A- 3 635 515
- FR-A- 2 587 827
- FR-A- 2 735 898
- US-A- 5 143 122

## Description

The present invention relates to a method for applying an external protective sheath made of shrink-wrap polymeric material to a corrugated flexible metal hoses, and to a corrugated metal hose produced by the method.

A method of applying an external protective polymeric sheath onto a corrugated metal hose and a corrugated metal hose produced by this method is known from e.g. DE-A-3 635 515.

Corrugated flexible metal hoses conventionally allow even significant changes in length which can be achieved by modest axial traction. This makes them particularly suitable for solving various connection problems whenever the distances of the parts or pipes to be connected are not perfectly determined or determinable when the connection is made.

Accordingly, a typical and widespread application of corrugated flexible and extensible metal hoses is the connection of cooking appliances to the gas supply system and the connection of sanitary and heating equipment to the hot and cold water supply system. The evident and obvious advantages arising from the use of corrugated flexible hoses in the provision of these typical connections and in other similar ones has brought about their widespread use as adaptable connection in various applications and often even in environments which are chemically hostile to the metal of said hoses, which are generally made of stainless steel, for example in environments where chlorine or chlorinated compounds are present, such as those used in the production of the detergents normally used in household cleaning.

Stainless steel is usually sensitive to chlorides; therefore these detergents, by making contact with the bare flexible hoses, can generate significant corrosion which is capable of perforating the wall of said hoses in a short time.

This is a severe drawback, to which remedy has been sought by applying on said hoses external protective sheaths typically made of shrink-wrap polymeric material.

However, owing to the corrugated profile of the hose, the application of shrink-wrap sheaths with the processes used so far has not yielded satisfactory results. These sheaths are in fact currently applied to corrugated hoses when said hoses have their minimum axial extension or minimum pitch between the corrugations, so that the sheath, by shrinking due to heating, is arranged substantially in a slightly undulated pattern which is tangent to the crests of the corrugations of the underlying hose but is distinctly spaced from the bottom of the troughs that lie between two contiguous corrugations of said hose.

This discontinuous adhesion of the sheath to the entire outer surface of the hose, caused by the action of the air which is trapped in the troughs of the hose and applies a radial pressure to the sheath, considerably compromises the extensibility of said hose and/or the protective action of the sheath owing to the reduced elasticity of the material thereof and accordingly owing to its substantial inextensibility.

In the case of good adhesion of the sheath to the crests of the corrugations of the hose, the extension of said hose is limited to the extension allowed by the flattening of the slight corrugations of the sheath, on penalty of tearing said sheath; otherwise, the hose slips out of the sheath and becomes exposed in the extended portion.

The object of the present invention is substantially to eliminate these severe drawbacks.

According to the invention this object is achieved by the method for applying an external protective sheath made of shrink-wrap polymeric material as defined in claim 1.

The above object is further achieved according to the invention by the corrugated metal hose as defined in claim 5. Particular embodiments of the invention are the subject of the dependent claims.

Substantially, the invention is based on the concept of shrink-wrapping the sheath on the underlying corrugated hose in a vacuum, eliminating the air before it is trapped between the troughs of the corrugated hose and facilitating, at least by means of the force of the atmospheric pressure that acts on the sheath when the hose is extracted from the vacuum, the penetration of the sheath in said troughs of the hose.

Typically, the method according to an embodiment of the present invention comprises the following operating steps:
-- preliminarily extending the portion of corrugated hose to be treated, making it assume a treatment configuration in which the pitch P between the crests of the rising corrugations and the depth H of the troughs of said corrugations are preferably in a ratio P/H which is typically between 1.15 and 1.25
-- loosely fitting the shrink rap sheath in a cylindrical configuration on the corrugated metal hose, which is kept stretched in the treatment configuration, and introducing the assembly in an airtight heating chamber;
-- generating a vacuum in said chamber and simultaneously heating said chamber until the shrink-wrap temperature of the sheath is reached;
-- maintaining in said chamber heating and vacuum for the time required for the temperature to stabilize; and then
-- suspending heating and vacuum in the airtight chamber and extracting the finished product.

Said finished product is constituted by a corrugated metal hose or hose portion which has, in its axially least extended configuration, an external surface which is entirely covered by the heat-shrunk sheath, which adheres to the hose without discontinuities both on the crests of the corrugations and in the troughs located between said corrugations.

The invention is now described in detail with reference to the accompanying exemplifying drawings, wherein:
figure 1 is a partially sectional schematic side elevation view of an airtight chamber, illustrating the method for performing the method according to the present invention;
figure 2 is a partial longitudinal sectional view of the corrugated hose, illustrating said hose in the treatment configuration, with the corresponding shrink-wrap sheath in a cylindrical configuration loosely fitted on said hose;
figure 3 is a partial longitudinal sectional view of the corrugated hose covered by the external protective sheath obtained with the method according to the present invention.

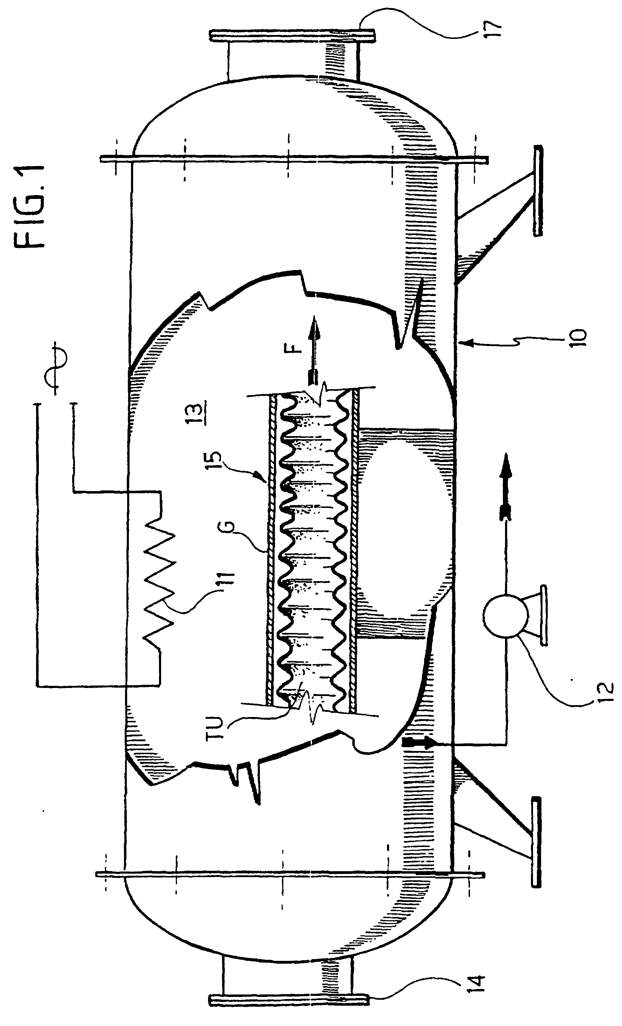

In figure 1, the reference numeral 10 designates an airtight container, typically an autoclave, which is provided with heating means 11 and is subjected to the action of a pump 12 which is capable of extracting the air from the chamber 13 of the autoclave 10 and of producing therein a vacuum of for example 10 to 15 mm Hg.

Segments 15 of corrugated hoses being treated are placed in the chamber 13 of the autoclave through a loading door 14.

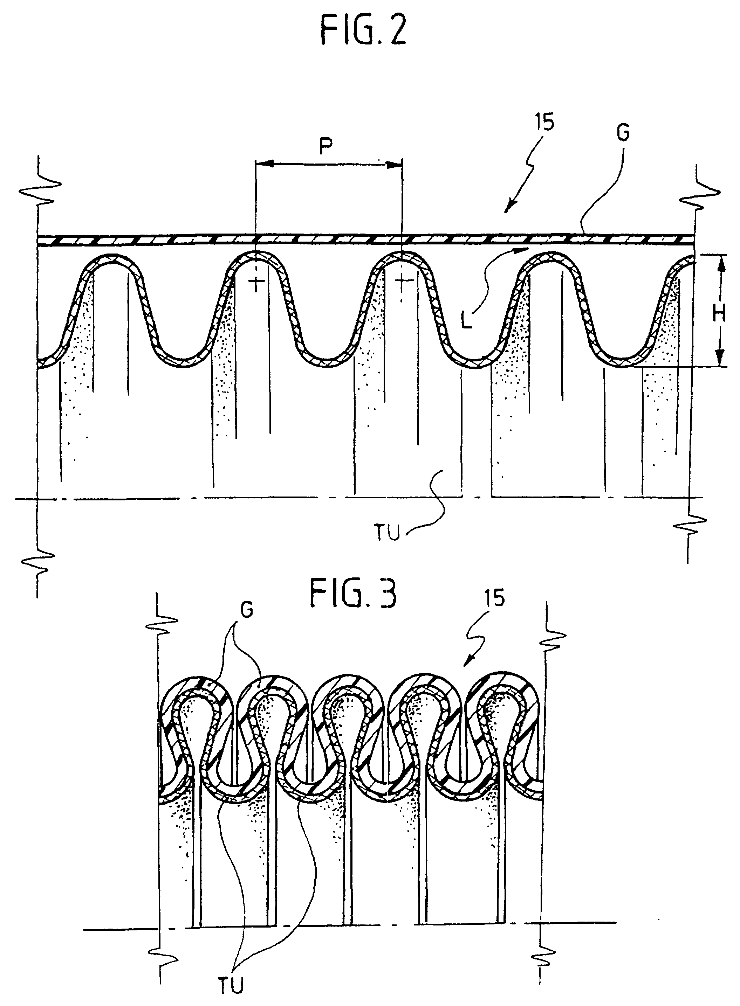

Each segment 15 being treated is constituted by a corresponding segment of corrugated metal hose TU to be sheathed and by a respective external sheath G made of shrink-wrap polymeric material, which is fitted loosely and in a cylindrical configuration on the corrugated hose, as shown in figure 2, which shows that a gap L is present between the hose and the sheath. Said figure also shows that the corrugated metal hose TU is first elongated, by applying an axial traction F, in order to make it assume a configuration -- referenced to as "treatment" configuration in the present description -- in which the pitch P between the rising crests of the corrugations and the depth H of the troughs that lie between two crests are preferably in a ratio P/H which is typically between 1.15-1.25, more typically P/H = 1.2. As an alternative, the hose can be manufactured directly in said treatment configuration.

The subsequent steps of the method for applying the sheath G to the hose TU entail the activation of the heating means 11, with consequent heating of the chamber 13, which continues until the shrinkage temperature of the sheath G is reached, and with the simultaneous activation of the pump 12, with consequent formation of a vacuum in said chamber.

Both heating and vacuum are maintained for the time required to stabilize the shrinking temperature, after which they are suspended and the finished products are removed through an unloading door 17.

It is evident that when the autoclave 10 is opened, atmospheric pressure returns to the chamber 13 thereof and, by acting on the sheath, which is still in the thermoplastic state, facilitates its bonding to the underlying hose TU, particularly at the bottom of the troughs thereof, where vacuum remains. However, according to the present invention the extraction of the finished products may also be preceded by a final step for pressurizing the chamber 13, through which said bonding of the sheath G to the underlying hose TU is increased considerably.

As shown clearly in the detail view of figure 3, the finished products are constituted by corrugated hoses or corrugated hose segments 15 which have, in their configuration providing their minimum axial extension, an outer surface which is entirely covered by the heat-shrunk sheath G, which adheres to the underlying corrugated metal hose TU without discontinuities and therefore both on the crests of the corrugations and in the troughs between said corrugations of the hose.

Without altering the concept of the invention, the details of execution of the method and the embodiments of the products produced thereby may of course be altered extensively with respect to what has been described and illustrated by way of non-limitative example without thereby abandoning the scope of the invention defined by the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for applying an external protective sheath (G) made of shrink-wrap polymeric material to a corrugated flexible metal hose (TU), **characterized in that** it consists in subjecting said corrugated hose (TU) and the sheath (G), which is fitted loosely thereon in a cylindrical configuration, to heating in vacuum.

2. A method according to claim 1, **characterized in that** it comprises the following operating steps:
-- preliminarily extending the corrugated hose (TU) to be treated, making it assume a treatment configuration, or producing the hose directly in said treatment configuration, in which the pitch (P) between the crests of the corrugations and the depth (H) of the troughs of said corrugations are preferably in a ratio P/H which is typically between 1.15 and 1.25;
-- loosely fitting the shrink-wrap sheath (G) in a cylindrical configuration on said corrugated metal hose (TU), which is stretched in the treatment configuration, and introducing the assembly in an airtight heating chamber (13);
-- generating a vacuum in said chamber (13) and simultaneously heating said chamber until the shrink-wrap temperature of the sheath (G) is reached;
-- maintaining in said chamber heating and vacuum for the time required for said shrink-wrap temperature to stabilize; and
-- suspending heating and vacuum and extracting the finished product (15') from the chamber (13).

3. A method according to claim 2, **characterized in that** it further comprises a final step for pressurizing the airtight heating chamber (13), said final step preceding the extraction of the finished products.

4. A method according to claims 1 and 3, wherein said heating and said vacuum are produced inside an autoclave (10) which is suitable to contain the hoses (TU) being treated.

5. A corrugated metal hose (15') produced by the method according to claims 1 to 4, **characterized in that** in its minimum axial extension configuration (figure 3) its outer surface is entirely covered by a shrink-wrapped sheath (G) which adheres to the underlying corrugated metal hose (TU) without discontinuities both on the crests of the corrugations and in the troughs that lie between said corrugations of the hose.

## Patentansprüche

1. Verfahren zum Aufbringen einer äußeren Schutzhülle (G) aus einem schrumpfbaren polymeren Material auf einen flexiblen Metallwellschlauch (TU), **dadurch gekennzeichnet, dass** es besteht aus: Unterziehen des Wellschlauches (TU) und der Hülle (G), die auf diesem in einer zylindrischen Konfiguration lose angebracht ist, einem Erhitzen im Vakuum.

2. Verfahren nach Anspruch 1, **dadurch gekennzeichnet, dass** es die folgenden Verfahrensschritte aufweist:
- Vorabausdehnen des zu bearbeitenden Wellschlauches (TU), um ihn eine Bearbeitungskonfiguration einnehmen zu lassen oder Herstellen des Schlauches unmittelbar in der Bearbeitungskonfiguration, in der der Abstand (P) zwischen den Scheitelpunkten der Wellen und den Tiefpunkten (H) der Talsohlen der Wellen sich vorzugsweise in einem Verhältnis P/H von typischerweise 1,15 und 1,25 befindet;
- lockeres Anbringen der schrumpfbaren Hülle (G) in einer zylindrischen Konfiguration auf den Metallwellschlauch (TU), der in die Bearbeitungskonfiguration gestreckt ist und Einführen der Anordnung in eine luftdichte Heizkammer (13);
- Erzeugen eines Vakuums in der Kammer (13) und gleichzeitiges Heizen der Kammer, bis die Schrumpftemperatur der Hülle (G) erreicht ist;
- Beibehalten des Heizens und des Vakuums in der Kammer für die erforderliche Zeit, um die Schrumpftemperatur zu stabilisieren; und
- Unterbrechen des Heizens und Aufheben des Vakuums und Entnehmen des fertiggestellten Produktes (15') aus der Kammer (13).

3. Verfahren nach Anspruch 2, **dadurch gekennzeichnet, dass** es weiter einen abschließenden Schritt des Druckaufschlagens der luftdichten Heizkammer (13) aufweist, wobei der abschließende Schritt der Entnahme des fertiggestellten Produktes vorausgeht.

4. Verfahren nach den Ansprüchen 1 und 3, wobei das Heizen und das Vakuum innerhalb einer Autoklave (10) erzeugt werden, die geeignet ist, die zu bearbeitenden Schläuche (TU) aufzunehmen.

5. Metallwellschlauch (15'), hergestellt nach dem Verfahren gemäß der Ansprüche 1 bis 4, **dadurch gekennzeichnet, dass** in dessen Konfiguration mit der minimalen axialen Ausdehnung (Figur 3) seine äußere Oberfläche vollständig von einer Schrumpfhülle (G) bedeckt ist, die an dem darunterliegenden Metallwellschlauch (TU) ohne Unterbrechung sowohl auf den Scheitelpunkten der Wellen als auch in den Talsohlen, die zwischen den Wellen des Schlauches liegen, anliegt.

## Revendications

1. Un procédé pour appliquer un revêtement externe (G) en matière polymère rétractable sur un tuyau métallique ondulé flexible (TU), **caractérisé en ce qu'**il consiste à soumettre ledit tuyau ondulé (TU) et le revêtement (G), qui est attaché de manière lâche sur celui-ci selon une configuration cylindrique, à un chauffage sous vide.

2. Un procédé selon la revendication 1, **caractérisé en ce qu'**il comprend les étapes opérationnelles suivantes consistant à :
- étendre préalablement le tuyau ondulé (TU) à traiter, en lui faisant adopter une configuration de traitement, ou produire le tuyau directement avec ladite configuration de traitement, dans laquelle le pas (P) entre les crêtes des ondulations et la profondeur (H) des creux desdites ondulations est de préférence dans un rapport P/H qui est typiquement compris entre 1,15 et 1,25 ;
- installer de manière lâche le revêtement rétractable (G) selon une configuration cylindrique sur ledit tuyau métallique ondulé (TU), lequel est étiré dans la configuration de traitement, et introduire l'ensemble dans une chambre de chauffage étanche à l'air (13) ;
- créer un vide dans ladite chambre (13) et chauffer simultanément ladite chambre jusqu'à atteindre la température de rétractabilité du revêtement (G);
- maintenir dans ladite chambre le chauffage et le vide pendant le temps nécessaire pour que ladite température de rétractabilité se stabilise ; et
- suspendre le chauffage et le vide et extraire le produit fini (15') de la chambre (13).

3. Un procédé selon la revendication 2, **caractérisé en ce qu'**il comprend en outre une étape finale destinée à mettre sous pression la chambre de chauffage étanche à l'air (13), ladite étape finale précédant l'extraction des produits finis.

4. Un procédé selon les revendications 1 et 3, dans lequel ledit chauffage et ledit vide sont produits à l'intérieur d'un autoclave (10) qui est adapté pour contenir les tuyaux (TU) qui sont traités.

5. Un tuyau métallique ondulé (15') produit par le procédé selon les revendications 1 à 4, **caractérisé en ce que**, dans sa configuration d'extension axiale minimale (figure 3), sa surface extérieure est entièrement recouverte d'un revêtement rétractable (G) qui adhère au tuyau métallique ondulé sous-jacent (TU) sans discontinuités à la fois sur les crêtes des ondulations et dans les creux situés entre lesdites ondulations du tuyau.
